# EUROPÄISCHE PATENTSCHRIFT

(11) **EP 0 510 303 B1**
(45) Veröffentlichungstag und Bekanntmachung des Hinweises auf die Patenterteilung: **08.03.1995**
(21) Anmeldenummer: 92101514.5
(22) Anmeldetag: 30.01.1992
(51) Int. Cl.: G01G 23/06, G01G 21/10

(54) **Vibrationsdämpfungselement an einer Waage**
Vibration damping element on a weighing device
Elément d'amortissement des vibrations allant avec une balance

(30) Priorität: 26.04.1991 CH 266/91
(43) Veröffentlichungstag der Anmeldung: 28.10.1992
(73) Patentinhaber: Mettler-Toledo AG, 8606 Greifensee (CH)
(72) Erfinder: Neeleman, Christiaan, CH-8032 Zürich (CH)

(56) Entgegenhaltungen:
- EP-A- 0 201 095
- CH-A- 661 120
- DE-C- 550 449
- DE-C- 843 610

## Beschreibung

Die Erfindung bezieht sich auf ein Vibrationsdaempfungselement, an einer Waage.

Vibrationsdaempfungselemente, welche die Waagschale vom Waagschalentraeger oder die Waage bzw. das Waagengehaeuse von dessen Unterlage oder Einbauplattform daempfend entkoppeln, sind beispielsweise aus der US 44 89 797 bekannt. Das hier beschriebene Vibrationsdaempfungselement besteht aus einem elastischen Material und ist in den Waagschalentraeger bis zu einem Teil seiner Gesamthoehe eingelassen. Es weist eine Sackbohrung auf, in die ein Halteelement oder ein Lastmesselement des Waagengehaeuses eingreift.

Ein solches Daempfungselement daempft nur in sehr beschraenktem Mass die auftretenden Schwingungen, wenn ein Gegenstand auf die Waagschale gelegt wird. Ausserdem kann ein solches Daempfungselement das Vibrationsverhalten der Waage mit Last und das ohne Last nur sehr wenig beeinflussen, weil durch die Formgebung fast keine Moeglichkeiten fuer eine Abstimmung auf das unterschiedliche Vibrationsverhalten in diesen beiden Faellen gegeben ist. Insbesondere kann mit einem solchen Daempfungselement nicht ein fuer den gesamten Lastbereich nahezu gleichmaessiges Eigenfrequenzverhalten der Waage erreicht werden. Ein solches ist jedoch wuenschenswert.

Die Aufgabe der Erfindung ist daher die Vermeidung der Nachteile des Standes der Technik und die Schaffung von Daempfungselementen, welche zufolge ihres Aufbaues in verschiedenster Weise fuer die auftretenden Kraefte und Lastfaelle einer Waage einsetzbar sind. Ausserdem soll ein fuer den gesamten Lastbereich nahezu gleichmaessiges Vibrationsverhalten der Waage erreicht werden, insbesondere hinsichtlich ihrer Eigenfrequenz.

Diese Aufgabe wird erfindungsgemaess durch das Kennzeichen des Anspruches 1 geloest. Darueberhinaus koennen solche Vibrationsdaempfungselemente die Merkmale der Ansprueche 2 bis 14 aufweisen. Weitere Einzelheiten und Merkmale erfindungsgemaesser Vibrationsdaempfungselemente ergeben sich aus der Beschreibung von Ausfuehrungsbeispielen anhand der Zeichnung. In dieser zeigt
- Fig. 1: einen Schnitt durch eine 1. Variante eines Vibrationsdaempfungselementes mit Zylinder oder Prismen {konzentrische Anordnung},
- Fig. 2: eine 2. Variante eines Vibrationsdaempfungselementes in Seitenansicht und in Draufsicht {benachbarte Anordnung},
- Fig. 3: eine 3. Variante eines Vibrationsdaempfungselementes in Seitenansicht und in Draufsicht, mit zusaetzlichen, seitlich angeordneten Daempfungselementen,
- Fig. 4: eine 4. Variante eines Vibrationsdaempfungselementes in Seitenansicht und in Draufsicht, mit zusätzlichen, seitlich angeordneten Daempfungselementen sowie einem Steg zwischen Daempfungselementen der Basisflaeche,
- Fig. 5: eine 5. Variante eines Vibrationsdaempfungselementes {Rautenform} in Seitenansicht.

Ein Vibrationsdaempfungselement 1 weist eine Grundplatte 1.1.3 auf, welche zum Anbau an einen Waagschalentraeger oder ein Gehaeuse einer Waage, gegebenenfalls auch zum einrastenden Anbau, beispielsweise durch aufgesetzte Zapfen 2 mit auf diesen sitzenden Klemmelementen 2.1 odgl., eingerichtet ist.

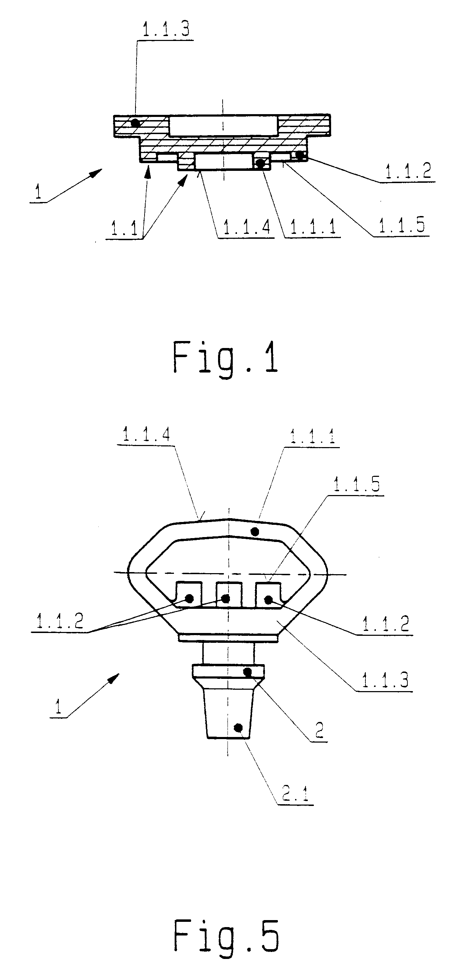

Bei einer 1. Ausfuehrungsvariante [Fig. 1] sind auf der Grundplatte 1.1.3 Daempfungskoerper 1.1 vorgesehen, welche als zwei verschieden hohe, kombinierte Daempfungskoerper 1. und 2. Art 1.1.1 bzw. 1.1.2 ausgebildet sind, die je mit ihrer von der Grundplatte 1.1.3 abgewandten Stirnseite 1.1.4 bzw. 1.1.5 zum Abstuetzen der Waage auf einer Unterlage oder zum Abstuetzen einer Waagschale auf einem Waagschalentraeger eingerichtet sind. Dabei wird die Kraftuebertragung vom Waagengehaeuse zur Unterlage oder von einer Waagschale oder auf einen Waagschalentraeger bis zu einer ersten Belastungsstufe von einem 1. Daempfungskoerper 1.1.1 und ab dieser zusaetzlich von einem 2. Daempfungskoerper 1.1.2 uebernommen. Die beiden Daempfungskoerper 1. und 2. Art 1.1.1 bzw. 1.1.2 des Vibrationsdaempfungselementes 1 sind hier als konzentrisch angeordnete Zylinder oder Prismen oder Hohlzylinder oder Hohlprismen verschiedener Hoehe ausgebildet, wobei die verschiedenen Hoehen den unterschiedlichen Laststufen bzw. Belastungen der Waage entsprechen.

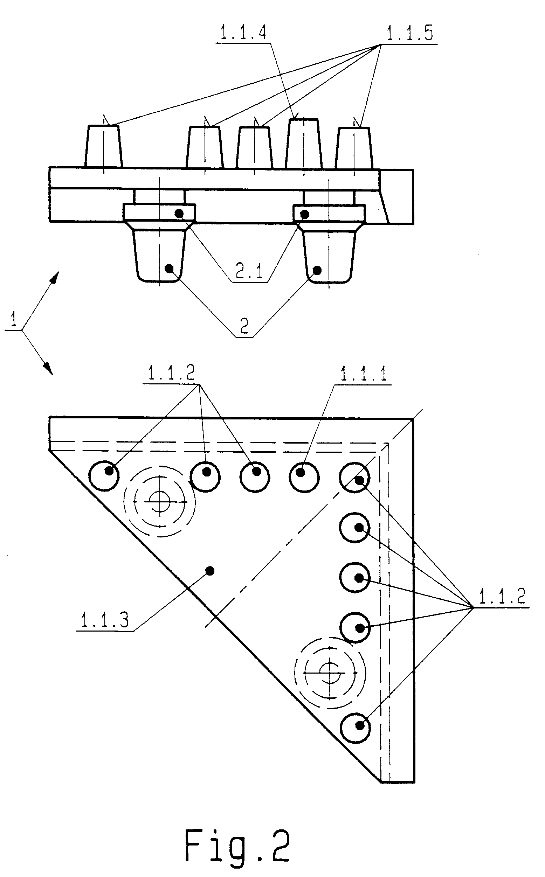

Bei einer 2. Ausfuehrungsvariante [Fig. 2] sind auf der Grundplatte 1.1.3 Daempfungskoerper 1.1 nebeneinander angeordnet, wobei wenigstens zwei verschieden hohe Daempfungskoerper 1. und 2. Art 1.1.1 bzw. 1.1.2 vorgesehen sind, welche je mit ihrer von der Grundplatte 1.1.3 abgewandten Stirnseite 1.1.4 bzw. 1.1.5 zum Abstuetzen der Waage auf einer Unterlage oder zum Abstuetzen einer Waagschale auf einem Waagschalentraeger eingerichtet sind. Dabei erfolgt die Kraftuebertragung vom Waagengehaeuse zur Unterlage oder einer Waagschale auf einen Waagschalentraeger bis zu einer ersten Belastungsstufe durch wenigstens einen 1. Daempfungskoerper 1.1.1 und ab dieser zusaetzlich durch wenigstens einen 2. Daempfungskoerper 1.1.2. Die beiden Daempfungskoerper 1. und 2. Art 1.1.1 bzw. 1.1.2 des Vibrationsdaempfungselementes 1 sind in dieser Ausfuehrungsform als nebeneinander angeordnete Zylinder, Prismen, Kegelstumpfe oder Pyramidenstumpfe verschiedener Hoehe ausgebildet, wobei die verschiedenen Hoehen den unterschiedlichen Laststufen bzw. Belastungen der Waage entsprechen und fuer diese vorgesehen sind.

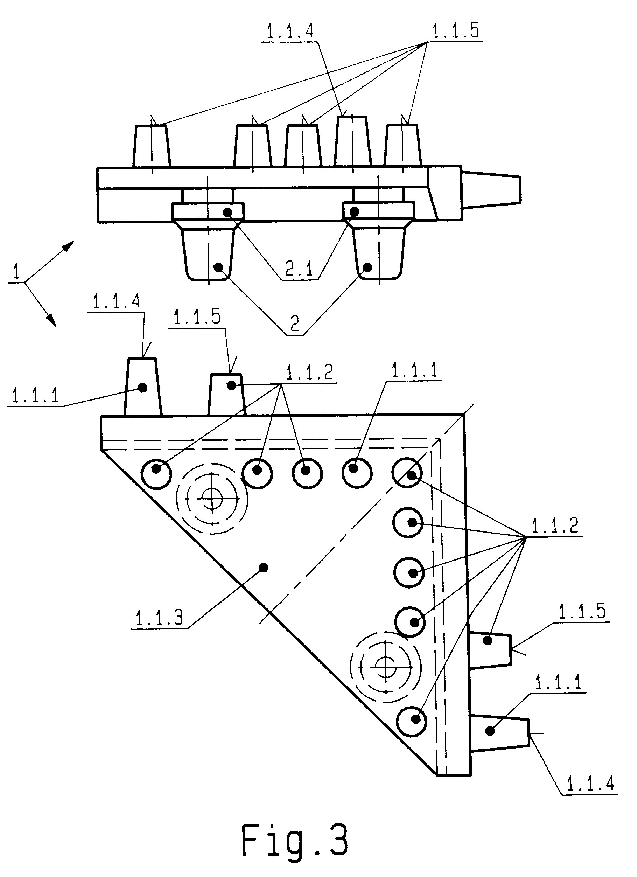

Bei einer 3. Ausfuehrungsvariante [Fig. 3] sind wie in der 2. Variante auf einer Basisflaeche der Grundplatte 1.1.3 Daempfungskoerper 1.1 nebeneinander angeordnet, wobei wenigstens zwei verschieden hohe Daempfungskoerper 1. und/oder 2. Art 1.1.1 bzw. 1.1.2 vorgesehen sind. Ausserdem sind an den seitlichen Raendern der Grundplatte 1.1.3 ebenfalls Daempfungskoerper 1. oder 2. Art vorgesehen, deren Achsenrichtung im wesentlichen senkrecht zur Achsenrichtung der auf der Basisflaeche der Grundplatte 1.1.3 angeordneten Daempfungskoerper 1. oder 2. Art angeordnet und zur Anlage an Seitenflaechen der Waagschale oder einer Einbaueinheit des Waagengehaeuses bringbar sind. Auch diese an den Seitenraendern angeordneten Daempfungskoerper koennen, wie die Daempfungkoerper 2. Art 1.1.2, als Prismen, Zylinder, Kegelstumpfe, Pyramidenstumpfe, Dachkantprismen usw. oder als Kombination derselben ausgebildet sein.

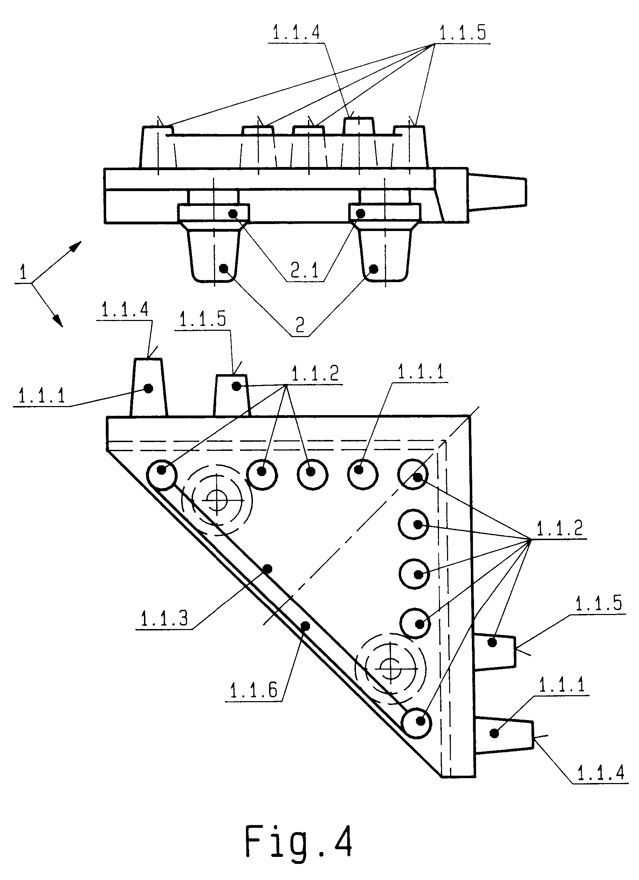

Eine 4. Ausfuehrungsvariante [Fig. 4] entspricht der Variante nach Figur 3.

Darueberhinaus sind jedoch die in den spitzwinkeligen Ecken des Grundkoerpers angeordneten Daempfungskoerper 1. Art 1.1.1 mittels eines Steges 1.1.6 miteinander verbunden, was den beiden exponierten Daempfungskoerpern mehr Stabilitaet verleiht, insbesondere gegenueber schraeg auf sie wirkenden Kraeften.

Bei einer 5. Ausfuehrungsvariante [Fig. 5] sind auf der Grundplatte 1.1.3 zwei verschieden hohe Daempfungskoerper 1. und 2. Art 1.1.1 bzw. 1.1.2 vorgesehen, welche je mit ihrer von der Grundplatte 1.1.3 abgewandten Stirnseite 1.1.4 bzw. 1.1.5 zum Abstuetzen der Waage auf einer Unterlage oder zum Abstuetzen einer Waagschale auf einem Waagschalentraeger eingerichtet sind. Dabei erfolgt die Kraftuebertragung vom Waagengehaeuse zur Unterlage oder einer Waagschale auf einen Waagschalentraeger in einer ersten Belastungsstufe durch einen 1. Daempfungskoerper 1. Art 1.1.1 in 2. Form {Rautenform} und in einer zweiten Belastungsstufe zusaetzlich durch Daempfungskoerper 2. Art 1.1.2. Dabei sind diese als nebeneinander angeordnete Prismen, Zylinder, Kegelstumpfe, Pyramidenstumpfe, Dachkantprismen usw., also im wesentlichen als saeulenfoermige Koerper, gleicher Hoehe ausgebildet. Im Bereich der seitlichen Raender der Grundplatte 1.1.3 ist der Daempfungskoerper 1. Art 1.1.1 in 2. Form {Rautenform} an die Grundplatte 1.1.3 angeschlossen, wobei er eine seitlich offene, oben offene oder geschlossene Rautenform besitzt und die Daempfungskoerper 2. Art 1.1.2 in deren axialer Richtung uebergreifend und ueberragend einschliesst. Auf der Grundplatte 1.1.3 ist auf der den Daempfungskoerpern abgewandten Seite ein Zapfen 2 mit auf diesem sitzendem Klemmelement 2.1 zur Montage an einem Bauteil, beispielsweise einem Waagschalentraeger, angeordnet.

Die Daempfungskoerper 1.1 in 1. Form {Prismen- oder Kegelform} koennen konzentrisch zueinander, nebeneinander oder auch in einer Mischung dieser beiden Anordnungsmoeglichkeiten vorgesehen sein. Wesentlich dabei ist, dass die Daempfungskoerper der 2. Art 1.1.2 eine geringere Hoehe aufweisen als die Daempfungskoerper der 1. Art 1.1.1. Dadurch wird eine stufenweise Lastaufnahme durch das Vibrationsdaempfungselement 1 bei Belastung der Waagschale gewaehrleistet. Dies bewirkt eine abgestufte Aenderung des Vibrationsverhaltens der Waage.

Darueberhinaus koennen die Daempfungskoerper 1. und 2. Art 1.1.1 bzw. 1.1.2 des Vibrationsdaempfungselementes 1 quer zu ihrer Achse fuer eine schwimmende Lagerung vom Waagengehaeuse gegenueber der Unterlage oder einer Waagschale auf einem Waagschalentraeger biegeleastisch vorgesehen sein.

Ausserdem kann das Vibrationsdaempfungselement 1 aus elektrisch leitfaehigem und zugleich gummielastischem Material bestehen.

Das Vibrationsdaempfungselement 1 kann auch auf seiner Grundplatte 1.1.3 Daempfungskoerper 1.1 aufweisen, welche in unterschiedlichen Ebenenrichtungen, insbesondere solchen normal zueinander, angeordnet sind und so zur Anlage an weitere Flaechen einer Waagschale oder einer Unterlage der Waage bringbar sind.

Es ist natuerlich auch moeglich, die Daempfungskoerper 1.1 in drei oder mehr Stufen verschieden hoch auszufuehren, womit eine noch differenziertere Anpassung an die Lastverhaeltnisse bzw. das Eigenschwingverhalten der Waage erreicht werden kann. Auch ist es moeglich, die Daempfungskoerper 1.1 1. oder 2. Art je mit einer nicht linearen Federkennlinie auszufuehren, was im Zusammenwirken mit der Formgebung der Daempfungskoerper 1.1 eine noch wesentlich feinere Abstufung des Vibrationsverhaltens der Waage ermoeglicht. Eine solche nichtlineare Federkennlinie kann, wie oben beschrieben, konstruktiv oder durch die Materialwahl vorgenommen werden. So weist z.B. Gummi eine im allgemeinen nicht lineare Federkennlinie auf. Insbesondere kann durch eine geeignete Kombination von Form und Material eine noch wesentliche Verbesserung in der Anpassung an das gewuenschte Vibrationsverhalten der Waage in den verschiedenen Belastungssituationen erreicht werden.

Ein solches mehrstufiges Daempfungselement gemaess der Erfindung bestimmt nicht nur das Vibrationsverhalten, sondern verbessert auch das Verhalten gegenueber Schlaegen auf die Waage und macht solche Schlaege weitgehend unwirksam bezueglich der Waegegenauigkeit.

Ein 2-stufiges Daempfungselement kann in einer der moeglichen Ausfuehrungsvarianten in seiner ersten, hoeheren Stufe die normale Last des Waegebereiches und in der zweiten, niedrigeren Stufe die Ueberlast aufnehmen. Dadurch wird erreicht, dass die erste Stufe bei Ueberlast nicht abgenuetzt oder beschaedigt wird.

Die saeulenfoermigen Daempfungskoerper haben den Vorteil, dass sie leicht an verschiedene Waagentypen, d.h. an deren unterschiedliches Vibrations- bzw. Eigenschwingverhalten, anpassbar sind.

In einer weiteren Ausfuehrungsform aller Daempfungskoerper 1. bzw 2. Art 1.1.1 bzw. 1.1.2 koennen diese an den freien Stirnflaechen 1.1.4 bzw. 1.1.5, an welchen sie mit einem dritten Gegenstand in Kontakt kommen, beispielsweise der Stellflaeche einer Waage, etc., bombiert ausgefuehrt sein.

Die Variante mit der Rautenform des Daempfungskoerpers 1. Art in 2. Form bietet den wesentlichen Vorteil, dass eine noch bessere Trennung der 2-Stufigkeit erzielbar ist, indem der Punkt der Ueberlast, bei welcher die Daempfungskoerper 2. Art in Aktion treten sollen, sehr genau festlegbar ist.

## Patentansprüche

1. Vibrationsdämpfungselement, angeordnet zwischen einer Waage und ihrer Unterlage oder zwischen einer Waagschale und ihrem Träger, wobei es einstückig ist und wenigstens zwei unterschiedliche Dämpfungskörper (1.1) umfasst, welche ihm eine mehrstufige Dämpfungswirkung unter Last verleihen, wobei wenigstens das Vibrationsdämpfungselement als Ganzes eine nichtlineare Federkennlinie aufweist.

2. Vibrationsdaempfungselement nach Anspruch 1, dadurch gekennzeichnet, dass auf einer, mit dem Waagengehaeuse und / oder dem Waagschalentraeger verbindbaren Grundplatte [1.1.3] als Daempfungskoerper [1.1] wenigstens zwei, je verschieden hohe Daempfungskoerper 1. Art bzw. 2. Art [1.1.1 bzw. 1.1.2] vorgesehen sind, dass sie je mit ihrer von der Grundplatte [1.1.3] abgewandten Stirnseite [1.1.4 bzw. 1.1.5] zum Abstuetzen der Waage auf einer Unterlage oder einer Waagschale auf einem Waagschalentraeger eingerichtet sind, wobei die Kraftuebertragung vom Waagengehaeuse zur Unterlage oder einer Waagschale auf einen Waagschalentraeger in einer ersten Belastungsstufe von einem Daempfungskoerper 1. Art [1.1.1] und in einer zweiten Belastungsstufe zusaetzlich von einem Daempfungskoerper 2. Art [1.1.2] uebernommen wird.

3. Vibrationsdaempfungselement nach Anspruch 2, dadurch gekennzeichnet, dass es auf seiner Grundplatte [1.1.3] Daempfungskoerper 1. und / oder 2. Art [1.1.1 bzw. 1.1.2] aufweist, welche in unterschiedlichen Ebenenrichtungen, insbesondere solchen normal zueinander, angeordnet sind und so zur Anlage an weitere Flaechen einer Waagschale oder einer Halterung der Waage bringbar sind.

4. Vibrationsdaempfungselement nach einem der Ansprueche 2 oder 3, dadurch gekennzeichnet, dass der Daempfungskoerper 1. Art [1.1.1] eine seitlich offene oder oben offene oder geschlossene Rautenform besitzt und die Daempfungskoerper 2. Art [1.1.2] in deren axialer Richtung uebergreifend und ueberragend einschliesst und in einer 1. Belastungsstufe die Uebertragungskraefte aufnimmt.

5. Vibrationsdaempfungselement nach einem der Ansprueche 2 oder 3, dadurch gekennzeichnet, dass die beiden Daempfungskoerper 1. bzw 2. Art [1.1.1 bzw. 1.1.2] als konzentrisch angeordnete Zylinder oder Prismen verschiedener Hoehe ausgebildet sind, wobei die verschiedenen Hoehen den unterschiedlichen Laststufen entsprechen.

6. Vibrationsdaempfungselement nach einem der Ansprueche 2 oder 3, dadurch gekennzeichnet, dass die beiden Daempfungskoerper 1. bzw 2. Art [1.1.1 bzw. 1.1.2] als nebeneinander angeordnete Zylinder oder Prismen verschiedener Hoehe ausgebildet sind, wobei die verschiedenen Hoehen den unterschiedlichen Laststufen entsprechen.

7. Vibrationsdaempfungselement nach einem der Ansprueche 2 oder 3, dadurch gekennzeichnet, dass die beiden Daempfungskoerper 1. bzw 2. Art [1.1.1 bzw. 1.1.2] als konzentrische Kegel- oder Pyramidenstumpfe verschiedener Hoehe ausgebildet sind, wobei die verschiedenen Hoehen den unterschiedlichen Laststufen entsprechen.

8. Vibrationsdaempfungselement nach einem der Ansprueche 2 oder 3, dadurch gekennzeichnet, dass die beiden Daempfungskoerper 1. bzw 2. Art [1.1.1 bzw. 1.1.2] als nebeneinander angeordnete Kegel- oder Pyramidenstumpfe verschiedener Hoehe ausgebildet sind, wobei die verschiedenen Hoehen den unterschiedlichen Laststufen entsprechen.

9. Vibrationsdaempfungselement nach einem der Ansprueche 2 oder 3, dadurch gekennzeichnet, dass als Daempfungskoerper 1. bzw 2. Art [1.1.1 bzw. 1.1.2] nebeneinander angeordnete Zylinder oder Prismen und Kegel- oder Pyramidenstumpfe verschiedener Hoehe vorgesehen sind, wobei die verschiedenen Hoehen den unterschiedlichen Laststufen entsprechen.

10. Vibrationsdaempfungselement nach einem der Ansprueche 2 oder 3, dadurch gekennzeichnet, dass als Daempfungskoerper 1. bzw 2. Art [1.1.1 bzw. 1.1.2] konzentrisch angeordnete Zylinder oder Prismen und Kegel- oder Pyramidenstumpfe verschiedener Hoehe vorgesehen sind, wobei die verschiedenen Hoehen den unterschiedlichen Laststufen entsprechen.

11. Vibrationsdaempfungselement nach einem der Ansprueche 2 bis 10, dadurch gekennzeichnet, dass die Daempfungskoerper [1.1.1 bzw. 1.1.2] wenigstens teilweise untereinander quer zu ihrer Achse durch wenigstens einen Steg [1.1.6] verbunden sind.

12. Vibrationsdaempfungselement nach einem der Ansprueche 1 bis 11, dadurch gekennzeichnet, dass die Daempfungskoerper 1. und 2. Art [1.1.1 bzw. 1.1.2] quer zu ihrer Achse fuer eine schwimmende Lagerung vom Waagengehaeuse gegenueber der Unterlage oder einer Waagschale auf einem Waagschalentraeger biegeleastisch sind.

13. Vibrationsdaempfungselement nach einem der Ansprueche 1 bis 12, dadurch gekennzeichnet, dass es aus elektrisch leitfaehigem und zugleich gummielastischem Material besteht.

14. Vibrationsdaempfungselement nach einem der Ansprueche 1 bis 13, dadurch gekennzeichnet, dass es auf seiner Grundplatte [1.1.3] auf der den Daempfungskoerpern abgewandten Seite zur Montage an einem Bauteil, beispielsweise einem Waagschalentraeger, wenigstens einen Zapfen [2] mit an ihm angeordneten Klemmelementen [2.1] aufweist.

## Claims

1. A vibration damping element arranged between a weighing apparatus and its support or between a weighing pan and its carrier wherein it is in one piece and includes at least two different damping bodies (1.1) which impart thereto a multi-stage damping effect under load, wherein at least the vibration damping element has as a whole a non-linear spring characteristic.

2. A vibration damping element according to claim 1 characterised in that provided on a base plate (1.1.3) which can be connected to the weighing apparatus housing and/or the weighing pan carrier, as a damping body (1.1), are at least two damping bodies of first kind and second kind respectively (1.1.1 and 1.1.2) each of different heights, that they are designed with their respective end (1.1.4 and 1.1.5 respectively) which is remote from the base plate (1.1.3) for supporting the weighing apparatus on a support or a weighing pan on a weighing pan carrier, wherein the transmission of force from the weighing apparatus housing to the support or a weighing pan to a weighing pan carrier is effected in a first loading level by a damping body of first kind (1.1.1) and in a second loading level additionally by a damping body of second kind (1.1.2).

3. A vibration damping element according to claim 2 characterised in that on its base plate (1.1.3) it has damping bodies of first and/or second kind (1.1.1 and 1.1.2 respectively) which are arranged in different plane directions, in particular those which are normal to each other, and can thus be brought to bear against further surfaces of a weighing pan or a holding means of the weighing apparatus.

4. A vibration damping element according to one of claims 2 and 3 characterised in that the damping body of first kind (1.1.1) is of a laterally open or upwardly open or closed rhombus shape and encloses the damping bodies of second kind (1.1.2) projecting and engaging over same in the axial direction thereof and in a first loading level carries the transmission forces.

5. A vibration damping element according to one of claims 2 and 3 characterised in that the two damping bodies of first and second kinds (1.1.1 and 1.1.2 respectively) are in the form of concentrically arranged cylinders or prisms of different heights, the different heights corresponding to the different load stages.

6. A vibration damping element according to one of claims 2 and 3 characterised in that the two damping bodies of first and second kinds (1.1.1 and 1.1.2 respectively) are in the form of juxtaposed cylinders or prisms of different heights, the different heights corresponding to the different load stages.

7. A vibration damping element according to one of claims 2 and 3 characterised in that the two damping bodies of first and second kinds (1.1.1 and 1.1.2 respectively) are in the form of concentric truncated cones or truncated pyramids of different heights, the different heights corresponding to the different load stages.

8. A vibration damping element according to one of claims 2 and 3 characterised in that the two damping bodies of first and second kinds (1.1.1 and 1.1.2 respectively) are in the form of juxtaposed truncated cones or truncated pyramids of different heights, the different heights corresponding to the different load stages.

9. A vibration damping element according to one of claims 2 and 3 characterised in that the damping bodies of first and second kinds (1.1.1 and 1.1.2 respectively) are juxtaposed cylinders or prisms and truncated cones or truncated pyramids of different heights, the different heights corresponding to the different load stages.

10. A vibration damping element according to one of claims 2 and 3 characterised in that the damping bodies of first and second kinds (1.1.1 and 1.1.2 respectively) are concentrically arranged cylinders or prisms and truncated cones or truncated pyramids of different heights, the different heights corresponding to the different load stages.

11. A vibration damping element according to one of claims 2 to 10 characterised in that the damping bodies (1.1.1 and 1.1.2 respectively) are at least partially connected together transversely with respect to their axis by at least one leg (1.1.6).

12. A vibration damping element according to one of claims 1 to 11 characterised in that the damping bodies of first and second kinds (1.1.1 and 1.1.2 respectively) are flexurally elastic transversely to their axis for floating mounting of the weighing apparatus housing relative to the support or a weighing pan on a weighing pan carrier.

13. A vibration damping element according to one of claims 1 to 12 characterised in that it comprises electrically conductive and at the same time rubber-elastic material.

14. A vibration damping element according to one of claims 1 to 13 characterised in that on its base plate (1.1.3), on the side remote from the damping bodies, it has at least one projection (2) with clamping elements (2.1) arranged thereon, for mounting to a component, for example a weighing pan carrier.

## Revendications

1. Elément d'amortissement de vibrations disposé entre une balance et son appui ou entre un plateau de balance et son support, cet élément étant en une pièce et comprenant au moins deux corps différents d'amortissement (1.1) qui lui confèrent sous charge un effet d'amortissement en plusieurs paliers, au moins l'élément d'amortissement de vibrations ayant globalement une caractéristique non linéaire d'élasticité.

2. Elément d'amortissement de vibrations selon la revendication 1, caractérisé en ce que des corps d'amortissement [1.1] qui sont prévus sur une plaque d'assise [1.1.3] pouvant être reliée à la cage de la balance et/ou au support du plateau de la balance sont au moins deux corps d'amortissement d'un 1er type ainsi que d'un 2ème type [1.1.1 ainsi que 1.1.2] ayant des hauteurs différentes, en ce que le côté frontal [1.1.4 ainsi que 1.1.5] de chacun d'eux qui est tourné à l'opposé de la plaque d'assise [1.1.3] est agencé pour le soutien de la balance sur un appui ou d'un plateau de balance sur un support de plateau de balance, la transmission de force de la cage de la balance à l'appui ou d'un plateau de balance à un support de plateau de balance étant assumée dans un premier palier de charge par un corps d'amortissement de 1er type [1.1.1] et dans un second palier de charge, accessoirement par un corps d'amortissement de 2ème type [1.1.2].

3. Elément d'amortissement de vibrations selon la revendication 2, caractérisé en ce qu'il comprend sur sa plaque d'assise [1.1.3] des corps d'amortissement du 1er et/ou du 2ème type [1.1.1 ainsi que 1.1.2] qui sont disposés dans des orientations de plan différentes, en particulier dans de tels plans perpendiculaires l'un à l'autre, et qui peuvent ainsi être mis en appui contre d'autres surfaces d'un plateau de balance ou d'un support de la balance.

4. Elément d'amortissement de vibrations selon l'une des revendications 2 ou 3, caractérisé en ce que le corps d'amortissement du 1er type [1.1.1] a une forme en losange ouverte latéralement ou ouverte vers le haut ou fermée et il entoure les corps d'amortissement du 2ème type [1.1.2] en les recouvrant en direction axiale et en les dépassant en hauteur et il absorbe les forces de transmission dans un 1er palier de charge.

5. Elément d'amortissement de vibrations selon l'une des revendications 2 ou 3, caractérisé en ce que les deux corps d'amortissement des 1er ainsi que 2ème types [1.1.1 ainsi que 1.1.2] sont constitués de cylindres ou de prismes de hauteurs différentes qui sont disposés concentriquement, les différentes hauteurs correspondant aux différents paliers de charge.

6. Elément d'amortissement de vibrations selon l'une des revendications 2 ou 3, caractérisé en ce que les deux corps d'amortissement des 1er ainsi que 2ème types [1.1.1 ainsi que 1.1.2] sont constitués de cylindres ou de prismes de hauteurs différentes qui sont juxtaposés, les différentes hauteurs correspondant aux différents paliers de charge.

7. Elément d'amortissement de vibrations selon l'une des revendications 2 ou 3, caractérisé en ce que les deux corps d'amortissement des 1er ainsi que 2ème types [1.1.1 ainsi que 1.1.2] sont constitués de troncs de cône ou de pyramide concentriques de hauteurs différentes, les différentes hauteurs correspondant aux différents paliers de charge.

8. Elément d'amortissement de vibrations selon l'une des revendications 2 ou 3, caractérisé en ce que les deux corps d'amortissement des 1er ainsi que 2ème types [1.1.1 ainsi que 1.1.2] sont constitués de troncs de cône ou de pyramide juxtaposés de hauteurs différentes, les différentes hauteurs correspondant aux différents paliers de charge.

9. Elément d'amortissement de vibrations selon l'une des revendications 2 ou 3, caractérisé en ce que les corps d'amortissement des 1er ainsi que 2ème types [1.1.1 ainsi que 1.1.2] qui sont prévus sont des cylindres ou des prismes et des troncs de cône ou de pyramide juxtaposés de hauteurs différentes, les différentes hauteurs correspondant aux différents paliers de charge.

10. Elément d'amortissement de vibrations selon l'une des revendications 2 ou 3, caractérisé en ce que les corps d'amortissement des 1er ainsi que 2ème types [1.1.1 ainsi que 1.1.2] qui sont prévus sont des cylindres ou des prismes et des troncs de cône ou de pyramide disposés concentriquement et de hauteurs différentes, les différentes hauteurs correspondant aux différents paliers de charge.

11. Elément d'amortissement de vibrations selon l'une des revendications 2 à 10, caractérisé en ce que les corps d'amortissement [1.1.1 ainsi que 1.1.2] sont reliés au moins partiellement les uns aux autres perpendiculairement à leur axe par au moins une nervure [1.1.6].

12. Elément d'amortissement de vibrations selon l'une des revendications 1 à 11, caractérisé en ce que les corps d'amortissement des 1er ainsi que 2ème types [1.1.1 ainsi que 1.1.2] sont élastiques à la flexion perpendiculairement à leur axe pour un support flottant de la cage de la balance sur l'appui ou d'un plateau de balance sur un support de plateau de balance.

13. Elément d'amortissement de vibrations selon l'une des revendications 1 à 12, caractérisé en ce qu'il est en matière conductrice de l'électricité et ayant également l'élasticité du caoutchouc.

14. Elément d'amortissement de vibrations selon l'une des revendications 1 à 13, caractérisé en ce qu'il comprend sur sa plaque d'assise [1.1.3], sur le côté tourné à l'opposé des corps d'amortissement, au moins un tenon [2] sur lequel sont disposés des éléments de serrage [2.1] pour le montage sur un composant, par exemple sur un support de plateau de balance.
